# EUROPEAN PATENT SPECIFICATION

(11) **EP 3 333 055 B1**
(45) Date of publication and mention of the grant of the patent: **05.06.2019**
(21) Application number: 17204362.2
(22) Date of filing: 29.11.2017
(51) Int. Cl.: B62J 6/00, B62J 6/02, B62J 6/18

(54) **STRADDLED VEHICLE**
GRÄTSCHSITZFAHRZEUG
VÉHICULE À ENFOURCHER

(30) Priority: 08.12.2016 JP 2016238241
(43) Date of publication of application: 13.06.2018
(73) Proprietor: Yamaha Hatsudoki Kabushiki Kaisha, Iwata-shi Shizuoka 438-8501 (JP)
(72) Inventor: NAKAMURA, Yosuke, Iwata-shi, Shizuoka 438-8501 (JP); MATSUDA, Kimio, Iwata-shi, Shizuoka 438-8501 (JP); KANEKO, Ryota, Iwata-shi, Shizuoka 438-8501 (JP)
(74) Representative: Grünecker Patent- und Rechtsanwälte PartG mbB

(56) References cited:
- EP-A1- 2 933 173
- WO-A1-2004/085918
- DE-C- 615 475
- JP-A- S5 572 474
- JP-A- 2002 337 774
- US-A- 4 189 762
- US-A1- 2008 298 078

## Description

The present invention relates to a straddled vehicle including a head lamp device. EP 2 933 173 A1 discloses the following features of claim 1; a straddled vehicle comprising:a vehicle main body;a head lamp device; and a plurality of harnesses, wherein the head lamp device includes a lamp housing having an opening,at least one fastening member that fastens the lamp housing to part of the vehicle main body,a lamp unit that is fitted in the lamp housing to close the opening,at least one fixed projection that projects toward the opening in a space between an inner surface of the lamp housing and an outer surface of the lamp unit, and at least one holding member made of a soft material,the plurality of harnesses are drawn into the lamp housing,the holding member includes a fixed end,a movable end, and a coupling portion that couples the fixed end and the movable end to each other.

Prior art document US 4,189,762 discloses a headlight for motorized two-wheeled vehicle employing a reflector and a headlight casing covering the rear surface of the reflector. A supporting structure is disposed inside the casing for receiving a wiring coupler placed in a space in the casing. The supporting structure extends from the casing and comprises a supporting member provided in the space as to extend from the casing. The supporting member serves to support a wiring coupler. The wiring coupler serves to interconnect an input side wire harness and an output side wire harness. These harnesses are led outside respectively through a through opening made in the bottom surface of the casing and a through opening made in the rear surface of the same. Each of the supporting members is made of a strip of metal separate from the casing and is attached thereto by means of a fastening screw. US 4,189,762 discloses the following features of claim 1; a straddled vehicle comprising:a vehicle main body;a head lamp device; and a plurality of harnesses, wherein the head lamp device includes a lamp housing having an opening,at least one fastening member that fastens the lamp housing to part of the vehicle main body,a lamp unit that is fitted in the lamp housing to close the opening,and at least one holding member,the plurality of harnesses are drawn into the lamp housing,the holding member includes a fixed end,a free end, and a coupling portion that couples the fixed end and the free end to each other, wherein the fixed end is fastened to the inner surface of an attachment portion of the lamp housing by the fastening member and the free end holds the plurality of harnesses.

In a straddled vehicle, electrical components such as a head lamp, an indicating lamp, and a handle switch are likely to be assembled at a front portion of the vehicle. A configuration in which part of wires extending from these electrical components and part of connectors of these wires are stored in a housing of the head lamp has been proposed. In a motorcycle described in JP 4104198 B2, for example, part of a cord for a bulb connected to a lamp, part of a cord for speed meter, and part of a cord for an indicator are stored together with a plurality of couplers (connectors) within a headlight case.

In the above-described headlight case, however, the plurality of cords are not secured and, therefore, it is not preferable that the plurality of cords swing in the headlight case during traveling of the motorcycle.

Also, the lamp is fitted in the headlight case with the plurality of cords and the plurality of couplers being stored in the headlight case. In this case, an operator needs to position, in advance, the cords and the couplers stored in the headlight case at a position at which the cords or the couplers do not come into contact with the lamp. As such, an operation of fitting the lamp becomes complicated.

If the plurality of cords are secured in the headlight case using a clamp in order to prevent the swinging of the plurality of cords and the complication of the operation of fitting the lamp, a load may be applied to the plurality of cords depending on the clamp.

An object of the present invention is to provide a straddled vehicle in which a load applied to a plurality of harnesses stored in a lamp housing is reduced, and an operation of fitting a lamp unit into the lamp housing is easily performed.

According to the present invention said object is solved by a straddled vehicle having the features of independent claim 1. Preferred embodiments are laid down in the dependent claims.
(1) A straddled vehicle according to one aspect of the present teaching includes a vehicle main body, a head lamp device, and a plurality of harnesses, the head lamp device includes a lamp housing having an opening, a fastening member that fastens the lamp housing to part of the vehicle main body, a lamp unit that is fitted in the lamp housing to close the opening, a fixed projection that projects toward the opening in a space between an inner surface of the lamp housing and an outer surface of the lamp unit, and a holding member made of a soft material, the plurality of harnesses are drawn into the lamp housing, the holding member includes a fixed end, a movable end, and a coupling portion that couples the fixed end and the movable end to each other, the fixed end is fastened to the inner surface of the lamp housing by the fastening member, and the movable end is provided with a hole into which the fixed projection can be pressed and out of which the fixed projection can be pulled, and the plurality of harnesses are held by the holding member between the fixed projection and the inner surface of the lamp housing while the fixed projection is pressed in the hole of the movable end.

In this straddled vehicle, the lamp housing of the head lamp device is fastened to the part of the vehicle main body, and the fixed end of the holding member is fastened to the inner surface of the lamp housing by the common fastening member. The plurality of harnesses drawn into the lamp housing are led to a space between the fixed projection and the inner surface of the lamp housing. The fixed projection is pressed into the hole of the movable end of the holding member, so that the plurality of harnesses are held between the fixed projection and the inner surface of the lamp housing by the holding member. The lamp unit is fitted into the lamp housing such that the opening of the lamp housing is closed.

With the aforementioned configuration, since the holding member is made of a soft material, a load applied from the holding member to the plurality of harnesses is reduced. Further, since the plurality of harnesses are held in the lamp housing, deterioration of the plurality of harnesses due to swinging of the plurality of harnesses in the lamp housing is prevented. Moreover, since the fixed projection projects toward the opening of the lamp housing, the operator can easily press the fixed projection into the hole of the movable end and also pull the fixed projection out of the hole of the movable end. Thus, the operator can easily perform the operation of fitting the lamp unit into the lamp housing.
(2) The movable end may be provided with an abutment portion that is abuttable against the outer surface of the lamp unit while the fixed projection is pressed into the hole of the movable end, and the abutment portion may prevent the movable end from moving in a direction toward the opening.
   In this case, the lamp unit fitted into the lamp housing prevents detachment of the movable end of the holding member from the fixed projection.
(3) The lamp unit may have a projecting outer surface that projects in the lamp housing in a direction opposite to a direction in which the fixed projection projects, and at least a tip of the fixed projection may be positioned between the projecting outer surface of the lamp unit and the inner surface of the lamp housing.
   In this case, when the lamp unit is fitted into the lamp housing, the lamp unit and the fixed projection do not interfere with each other. Also, the tip of the fixed projection functions as a guide of the lamp unit. Thus, the operation of fitting the lamp unit into the lamp housing is further facilitated.
(4) The fastening member may include a bolt and a collar member, the lamp housing may be provided with a first through hole having a non-circular cross section, the fixed end may be provided with a second through hole having a cross section of the same shape as that of the first through hole, the collar member may have a cross sectional shape corresponding to the first and second through holes, and the bolt may be inserted into the collar member while the collar member is inserted in the first through hole of the lamp housing and the second through hole of the fixed end.
   In this case, the collar member inserted into the first and second through holes prevents a relative rotation among the lamp housing, the fixed end, and the collar member. In this state, the bolt is inserted into the collar member, and the fixed end of the holding member is fastened to the inner surface of the lamp housing. This prevents the fixed end of the holding member from rotating with respect to the lamp housing together with the rotation of the bolt. Thus, the fixed end of the holding member can be easily and properly fastened to the inner surface of the lamp housing.
(5) The lamp housing and the fixed projection may be integrally formed of the same material.
   In this case, the number of components of the head lamp device is reduced, and assembly of the head lamp device is further facilitated.
(6) At least some of the plurality of harnesses may be connected to one another by a connector in the lamp housing.
   In this case, the connector connecting the at least some of the harnesses is protected in the lamp housing.
(7) The connector may be held between the fixed projection and the inner surface of the lamp housing by the holding member.

In this case, the connector connecting the at least some of the harnesses is prevented from swinging in the lamp housing.

### BRIEF DESCRIPTION OF THE SEVERAL VIEWS OF THE DRAWING

Fig. 1 is a schematic side view showing a schematic configuration of a motorcycle according to one preferred embodiment;
Fig. 2 is a perspective view of the appearance of a head lamp device of Fig. 1;
Fig. 3 is a front view of a lamp unit;
Fig. 4 is a cross sectional view of the lamp unit of Fig. 3 taken along the line A-A;
Fig. 5 is a one-side view of the head lamp device of Fig. 1;
Fig. 6 is a front view of the head lamp device of Fig. 1;
Fig. 7 is a cross sectional view of the head lamp device of Fig. 6 taken along the line B-B;
Fig. 8(a) is a plan view of a harness holding member of Fig. 7;
Fig. 8(b) is a side view of the harness holding member of Fig. 7;
Fig. 9 is a perspective view showing a method of attaching the head lamp device to a lamp support member;
Fig. 10 is a front view of a lamp housing showing a state in which a plurality of harnesses are positioned;
Fig. 11 is a front view showing a positional relationship between a tapered portion of the lamp housing and a pair of harness holding members when the head lamp device is viewed from a front of the vehicle; and
Fig. 12 is a cross sectional view of the head lamp device for explaining a rear end recess.

### DESCRIPTION OF THE PREFERRED EMBODIMENTS

A straddled vehicle according to one preferred embodiment will be described below with reference to the drawings. In the following description, a motorcycle will be described as one example of the straddled vehicle.

### [1] Schematic Configuration of Motorcycle

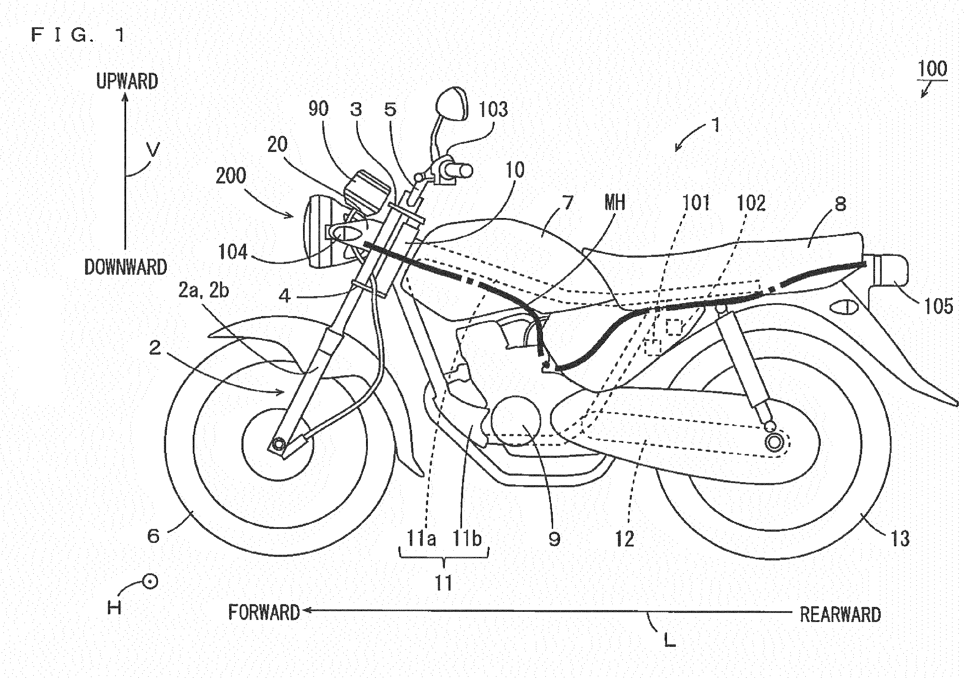

Fig. 1 is a schematic side view showing a schematic configuration of the motorcycle according to the one preferred embodiment. Fig. 1 shows the motorcycle 100 standing upright perpendicularly to a road surface. In Fig. 1 and some of the subsequent drawings, arrows indicate a front-and-rear direction L, a right-and-left direction H and a top-and-bottom direction V of the motorcycle 100 as appropriate. In the following description, a direction in which an arrow is directed in the front-and-rear direction L is referred to as forward, and its opposite direction is referred to as rearward. A direction in which an arrow is directed in the right-and-left direction H is referred to as leftward, and its opposite direction is referred to as rightward. Further, a direction in which an arrow is directed in the top-and-bottom direction V is referred to as upward, and its opposite direction is referred to as downward.

The motorcycle 100 of Fig. 1 includes a head pipe 10 and a vehicle body frame 11. The vehicle body frame 11 includes an upper frame 11a and a lower frame 11b. The upper frame 11a is formed to extend rearward from the head pipe 10. The lower frame 11b extends a certain distance obliquely downward and rearward from the head pipe 10 and also curves rearward. A rear end of the lower frame 11b extends obliquely upward and rearward and is connected to the upper frame 11a.

The head pipe 10 is provided with a front fork 2 that is swingable in the right-and-left direction H. The front fork 2 includes a pair of right and left fork tubes 2a, 2b, an upper bracket 3 and an under bracket 4. The upper bracket 3 couples upper ends of the pair of fork tubes 2a, 2b to each other, and the under bracket 4 couples the pair of fork tubes 2a, 2b to each other at a position further downward than the upper bracket 3. A handle 5 is attached to an upper end of the front fork 2, and a front wheel 6 is rotatably attached to a lower end of the front fork 2.

A fuel tank 7 and a seat 8 are provided on the upper frame 11a to be aligned in this order in the front-and-rear direction L. An engine 9 is provided between the upper frame 11a and the lower frame 11b. The fuel tank 7, the seat 8 and the engine 9 are supported by the vehicle body frame 11. A rear arm 12 is provided to extend rearward from a lower end and the rear end of the lower frame 11b. A rear wheel 13 is rotatably attached to a rear end of the rear arm 12. The rear wheel 13 is rotated by power generated by the engine 9.

A lamp support member 20 is attached to the upper bracket 3 and the under bracket 4 of the front fork 2. The lamp support member 20 extends forward from a position between the upper bracket 3 and the under bracket 4. A head lamp device 200 is attached to a front end of the lamp support member 20. Furthermore, a pair of right and left flasher devices 104 is attached to the lamp support member 20. Details of the lamp support member 20 and the head lamp device 200 will be described below. A speed meter 90 is provided at a position above the head lamp device 200. The speed meter 90 is supported by the upper bracket 3. An assembly of constituent elements of the motorcycle 100 of Fig. 1 except for the head lamp device 200 will be referred to as a vehicle main body 1 as appropriate in the following description.

The motorcycle 100 includes a plurality of electric components such as an ECU (Electronic Control Unit) 101, a battery 102, a pair of right and left handle switches 103, a tail lamp device 105, a main switch, etc. not shown, in addition to the above-described head lamp device 200 and pair of flasher devices 104. The plurality of electric components provided in the motorcycle 100 are electrically connected to one another. In the motorcycle 100 of this example, a main harness MH for connecting the plurality of electric components to one another is attached to the vehicle body frame 11 as indicated by a bold dot and dashed line of Fig. 1. The main harness MH includes a plurality of harnesses. Each of the plurality of electric components is connected to the main harness MH by sub-harnesses.

Each of the plurality of harnesses of the main harness MH and of the sub-harnesses is a wire harness for wiring that includes one or a plurality of electrical wires. The wire harness is used, for example, to transmit an electrical signal between the ECU 101 and another electric component or to supply power of the battery 102 to another electric component.

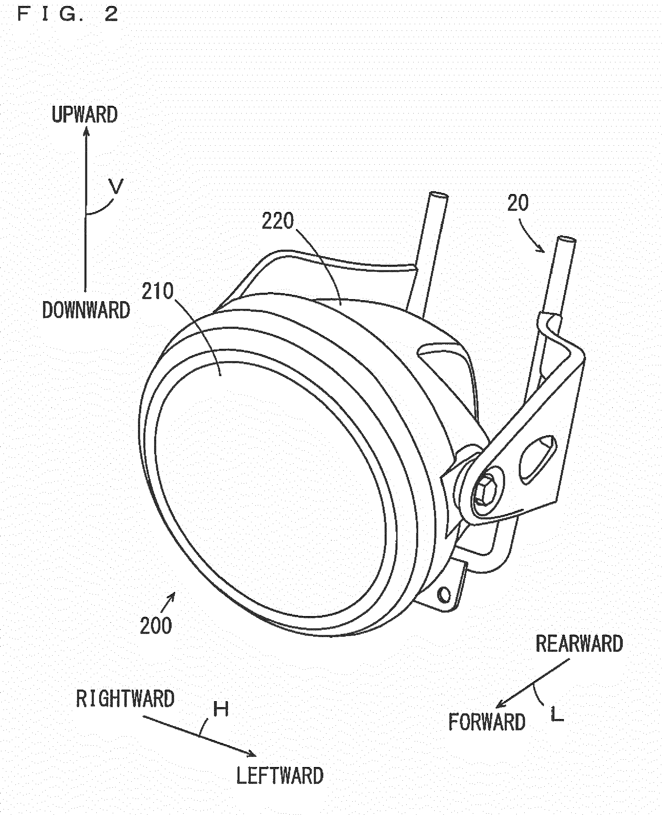

Some of the harnesses of the main harness MH are drawn into a lamp housing 220 (Fig. 2), as described below, of the head lamp device 200. The plurality of sub-harnesses extending from the plurality of electric components provided at a front portion of the vehicle main body 1 are drawn into the lamp housing 220, as described below, of the head lamp device 200 and are connected to some of the harnesses of the main harness MH. Note that the plurality of electric components provided at the front portion of the vehicle main body 1 include the aforementioned pair of handle switches 103 and pair of flasher devices 104, etc. In the following description, each of some of the harnesses of the main harness MH and of the plurality of sub-harnesses, which are connected to one another in the lamp housing 220, is collectively referred to as a harness.

### [2] Head Lamp Device and Attachment Structure of Head Lamp Device

Fig. 2 is a perspective view of the appearance of the head lamp device 200 of Fig. 1. Fig. 2 shows the lamp support member 20, which is part of the vehicle main body 1 together with the head lamp device 200. The head lamp device 200 includes a lamp unit 210 and a lamp housing 220 as shown in Fig. 2.

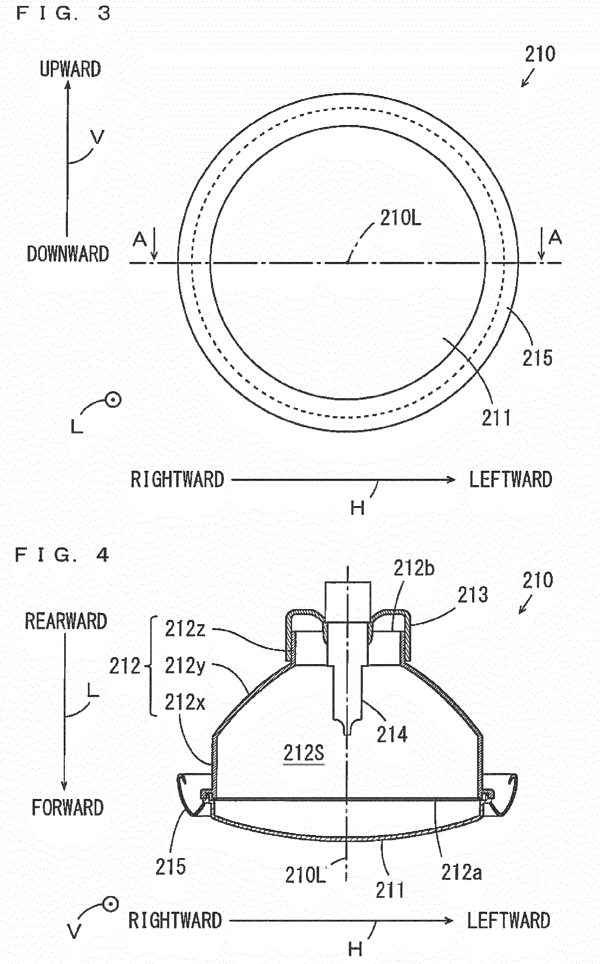

Details of the configuration of the lamp unit 210 will be described below. Fig. 3 is a front view of the lamp unit 210, and Fig. 4 is a cross sectional view of the lamp unit 210 of Fig. 3 taken along the line A-A. The lamp unit 210 includes a lens member 211 and an annular coupling member 215 as shown in Fig. 3. The lamp unit 210 further includes a reflector member 212, a socket 213, and a bulb 214 as shown in Fig. 4.

The reflector member 212 has a front end 212a and a rear end 212b. Openings are formed in the front end 212a and the rear end 212b, respectively. The reflector member 212 is constituted by a front cylindrical portion 212x, a tapered portion 212y, and a rear cylindrical portion 212z. The front cylindrical portion 212x has a cylindrical shape extending a certain distance rearward from the front end 212a. The rear cylindrical portion 212z has a cylindrical shape extending a certain distance forward from the rear end 212b. The front cylindrical portion 212x has a diameter larger than that of the rear cylindrical portion 212z. The tapered portion 212y is formed to be gradually smaller in diameter from a rear end of the front cylindrical portion 212x to a front end of the rear cylindrical portion 212z. Thus, an outer peripheral surface of the tapered portion 212y is inclined with respect to a center line 210L of the lamp unit 210 in parallel with the front-and-rear direction L. A bulb storing space 212S is formed inside of the reflector member 212.

The lens member 211 having a substantially disk-shape is attached to the front end 212a of the reflector member 212. In this case, the lens member 211 is connected to the front cylindrical portion 212x, and the opening of the front end 212a is closed by the lens member 211.

The annular metallic coupling member 215 is attached to the reflector member 212 and the lens member 211 so as to surround the front end 212a of the reflector member 212 and an outer periphery of the lens member 211.

The bulb 214 is attached to the socket 213, and the socket 213 is attached to the rear end 212b of the reflector member 212. In this case, the socket 213 is connected to the rear cylindrical portion 212z, and the opening of the rear end 212b is closed by the socket 213 and the bulb 214. A light emitting portion of the bulb 214 is held in the bulb storing space 212S.

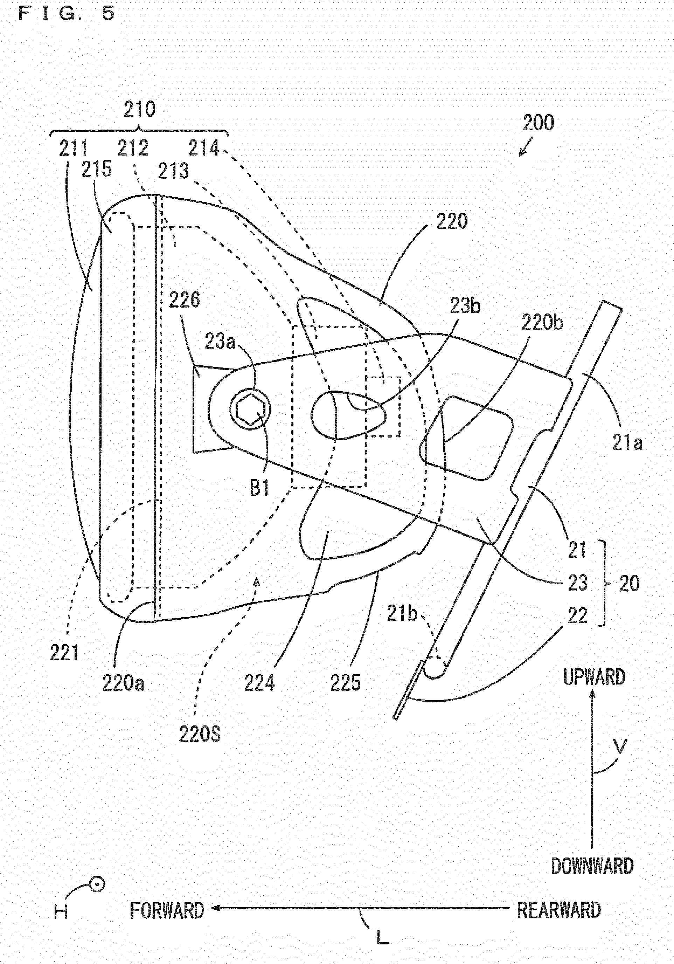

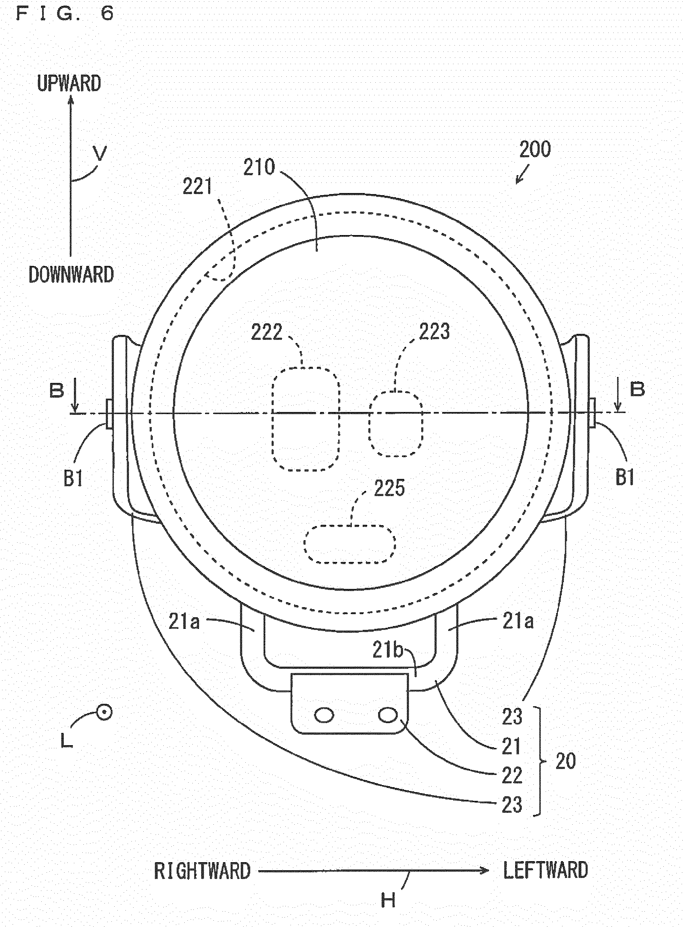

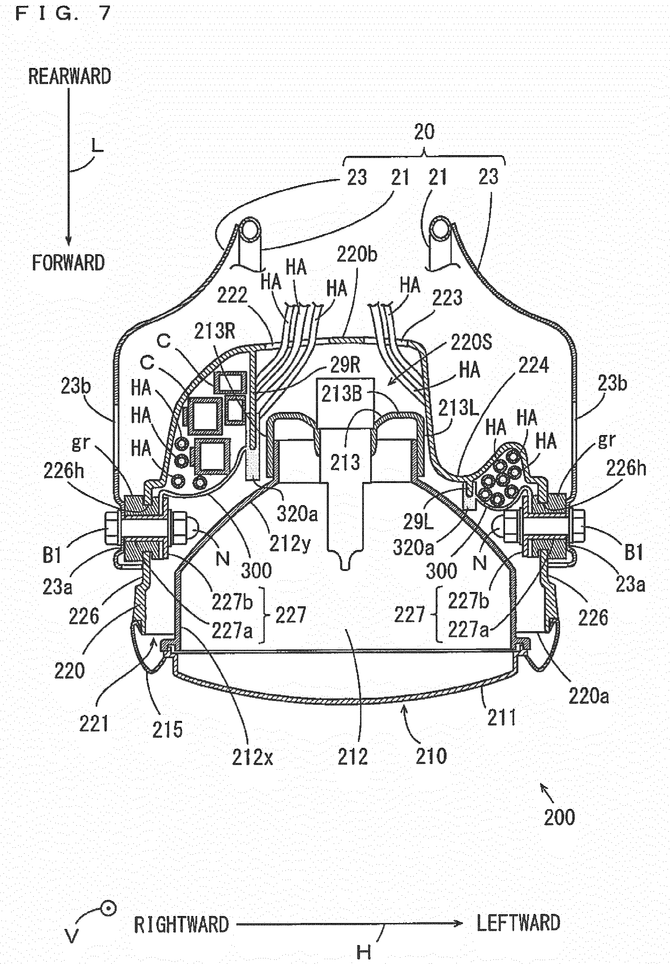

Fig. 5 is a one-side view of the head lamp device 200 of Fig. 1, Fig. 6 is a front view of the head lamp device 200 of Fig. 1, and Fig. 7 is a cross sectional view of the head lamp device 200 of Fig. 6 taken along the line B-B. Figs. 5 to 7 show the lamp support member 20 together with the head lamp device 200 similarly to the example of Fig. 2. Details of the lamp support member 20 will be described below.

The lamp housing 220 is an integrally molded resin product and has a front end 220a and a rear end 220b as shown in Fig. 7. The lamp housing 220 forms a lamp storing space 220S that stores part of the lamp unit 210. A first circular opening 221 having an inner diameter that is substantially the same as an outer diameter of the lens member 211 of the lamp unit 210 is formed in the front end 220a of the lamp housing 220. The lamp unit 210 is fitted into the lamp housing 220 to close the first opening 221. In this state, the annular coupling member 215 of the lamp unit 210 is connected to the front end 220a of the lamp housing 220 using a screw (not shown).

As shown in Figs. 6 and 7, a second opening 222 and a third opening 223 are formed to be lined up in the right-and-left direction H at a center of the rear end 220b of the lamp housing 220. As shown in Figs. 5 and 7, a left portion of the rear end 220b of the lamp housing 220, which is positioned further leftward than the second opening 222 and the third opening 223, is recessed in a concave shape outward (rearward) of the lamp storing space 220S. The recess in the rear end 220b of the lamp housing 220 is referred to as a rear end recess 224. The rear end recess 224 will be described in detail below. As shown in Figs. 5 and 6, a fourth opening 225 is formed to extend a certain distance forward from a lower end of the rear end 220b of the lamp housing 220.

The plurality of harnesses HA provided in the motorcycle 100 are drawn into the lamp storing space 220S of the lamp housing 220 through the second, third and fourth openings 222, 223, 225. The plurality of harnesses HA drawn into the lamp housing 220 are not shown in Figs. 5 and 6. Fig. 7 shows the plurality of harnesses HA drawn into the lamp housing 220. Some of the plurality of harnesses HA drawn into the lamp housing 220 are connected with the other harnesses HA by connectors C in the lamp housing 220.

The lamp housing 220 is configured to be attachable to and detachable from the lamp support member 20. A structure of the lamp support member 20 will now be described. As shown in Figs. 5 and 6, the lamp support member 20 includes a support shaft 21, a fixing piece 22, and a pair of support plates 23. The support shaft 21 has a pair of right and left long shaft portions 21a extending rearward and upward from forward and downward, and a short shaft portion 21b that connects lower ends of the pair of long shaft portions 21a. The fixing piece 22 is formed of a substantially rectangular plate-shaped member and is connected to a lower end of the support shaft 21. The fixing piece 22 has a plurality of through holes (two in this example) formed therein. Upper ends of the pair of long shaft portions 21a are attached to the upper bracket 3 of Fig. 1, and the fixing piece 22 connected to the short shaft portion 21b is attached to the under bracket 4 of Fig. 1 using a screw (not shown). Thus, the lamp support member 20 is fixed to the front fork 2 of Fig. 1.

The support plates 23 of the lamp support member 20 are spaced apart from each other and extend forward from central portions of the long shaft portions 21a. A lamp attachment portion 23a is formed at each support plate 23 to attach the lamp housing 220 to a vicinity of a front end of the support plate 23. A through hole for allowing a shank of a bolt B1 (Fig. 7) used for attachment of the lamp housing 220 to pass through is formed in the lamp attachment portion 23a. A flasher attachment portion 23b for attaching the flasher device 104 of Fig. 1 is formed at a position on each support plate 23 that is a certain distance backward from the lamp attachment portion 23a. Note that the flasher device 104 of Fig. 1 is not shown in Fig. 2 and the subsequent drawings.

As shown in Fig. 7, a pair of right and left attachment portions 226 is formed at both side portions of the lamp housing 220 in the right-and-left direction H. When the lamp housing 220 is attached to the lamp support member 20, the pair of attachment portions 226 of the lamp housing 220 is fastened to the pair of lamp attachment portions 23a using the bolts B1 and the nuts N. At that time, a grommet gr, a collar member 227 and a harness holding member 300 are provided between a head of each bolt B1 and each nut N.

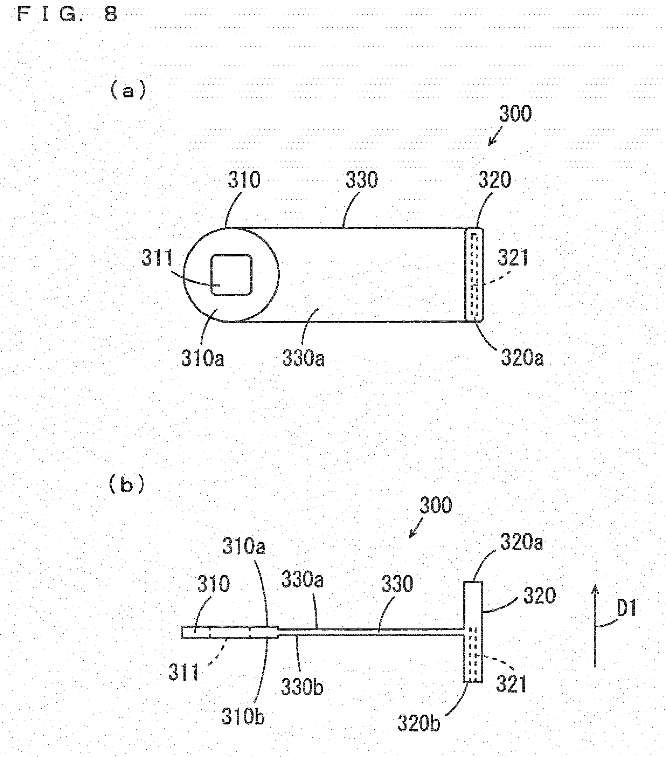

Fig. 8(a) is a plan view of the harness holding member 300 of Fig. 7, and Fig. 8(b) is a side view of the harness holding member 300 of Fig. 7. The harness holding member 300 is formed of a soft material as a single member. Polyvinyl chloride (PVC) or rubber, for example, is used as the soft material of the harness holding member 300. As shown in Figs. 8(a) and 8(b), the harness holding member 300 includes a fixed end 310, a movable end 320, and a coupling portion 330.

The coupling portion 330 is formed in a strip shape to couple the fixed end 310 and the movable end 320 to each other, and has one surface 330a and another surface 330b. A longitudinal dimension (length) of the coupling portion 330 is determined based on a distance between the attachment portion 226 provided with the harness holding member 300 and a fixed projection 29L, 29R (Fig. 7) corresponding to the attachment portion 226, which will be described below. In this embodiment, the length of the coupling portion 330 of the harness holding member 300 provided at the right attachment portion 226 is larger than the length of the coupling portion 330 of the harness holding member 300 provided at the left attachment portion 226.

The fixed end 310 has one surface 310a positioned on the one surface 330a side of the coupling portion 330 and another surface 310b positioned on the other surface 330b side of the coupling portion 330. A through hole 311 having a non-circular cross section (a substantially square cross section in this example) is formed in the fixed end 310. The movable end 320 is formed to extend a certain distance in a direction orthogonal to the coupling portion 330. The movable end 320 has one end 320a positioned on the one surface 330a side of the coupling portion 330 and another end 320b positioned on the other surface 330b side of the coupling portion 330.

As shown in Fig. 8(b), a hole 321 is formed to extend from the other end 320b of the movable end 320 to an inner center in the movable end 320 in a direction D1 orthogonal to the coupling portion 330. The hole 321 is opened at the other end 320b and is formed such that the fixed projection 29L, 29R (Fig. 7) described below can be pressed into and pulled out of the hole 321.

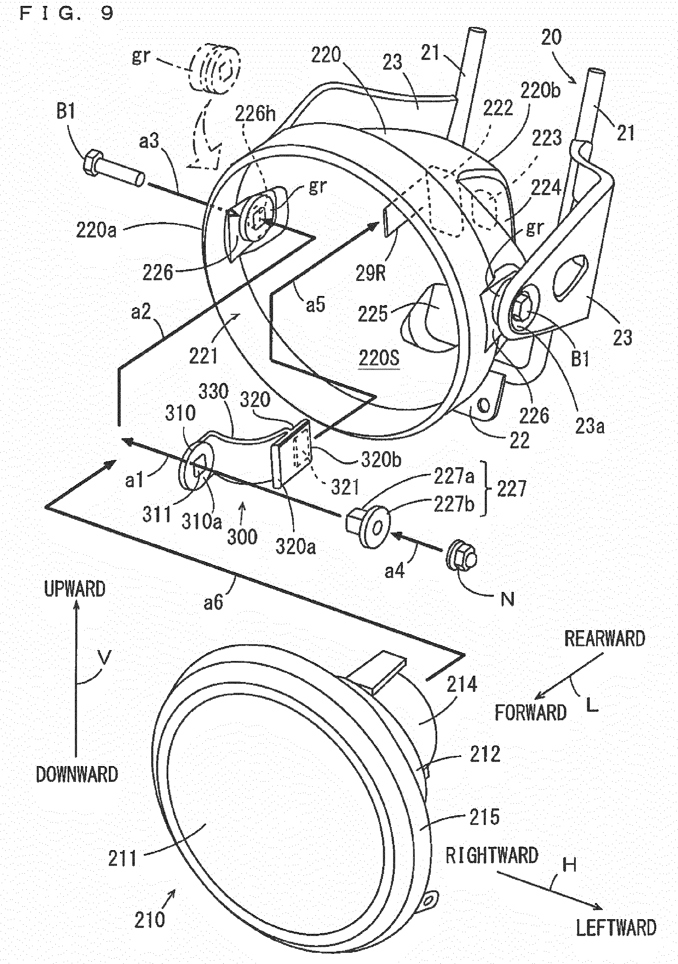

Fig. 9 is a perspective view showing a method of attaching the head lamp device 200 to the lamp support member 20. Fig. 9 mainly shows a procedure of attaching the right attachment portion 226 of the lamp housing 220 to the right lamp attachment portion 23a (Fig. 7) of the lamp support member 20. A through hole 226h having a non-circular cross section (a substantially square cross section in this example) is formed in each attachment portion 226 of the lamp housing 220 as shown in Fig. 9. The cross section of the through hole 226h of the attachment portion 226 has the same shape as that of the cross section of the through hole 311 of the harness holding member 300 of Fig. 8(a).

A rubber grommet gr having a substantially cylindrical shape is attached to the through hole 226h as indicated by the blank arrow of the dot and dashed line of Fig. 9. The grommet gr functions as an impact buffer member between the lamp support member 20 and the lamp housing 220. A through hole having a cross section of the same shape as that of the through hole 226h is formed in the grommet gr.

The collar member 227 is attached to the through hole of the grommet gr from the lamp storing space 220S of the lamp housing 220. The collar member 227 has a cylinder portion 227a and a flange portion 227b. The cylinder portion 227a has a non-circular cross section (a substantially square cross section in this example) corresponding to the through hole 226h of the attachment portion 226 and the through hole 311 of the harness holding member 300, and also has a through hole through which the above-described bolt B1 can be inserted. The flange portion 227b is provided at one end of the cylinder portion 227a.

When the collar member 227 is attached to the grommet gr, the cylinder portion 227a of the collar member 227 is first inserted into the through hole 311 of the harness holding member 300 as indicated by the thick arrow a1 of Fig. 9. At that time, the harness holding member 300 is arranged such that the one surface 310a of the fixed end 310 comes into contact with the flange portion 227b. After that, the cylinder portion 227a of the collar member 227 is inserted into the through hole of the grommet gr from inside of the lamp housing 220 as indicated by the thick arrow a2 of Fig. 9. Thus, the fixed end 310 of the harness holding member 300 is held between the flange portion 227b and the grommet gr.

In this state, the shank of the bolt B1 is inserted through the through hole of the lamp attachment portion 23a (Fig. 4) and the through hole of the collar member 227 from outside of the support plate 23 of the lamp support member 20 as indicated by the thick arrow a3 of Fig. 9. Furthermore, the nut N is attached to a tip of the bolt B1 as indicated by the thick arrow a4 of Fig. 9. Thus, the attachment portion 226 of the lamp housing 220 is fastened to the lamp attachment portion 23a (Fig. 7). With the lamp housing 220 attached to the lamp support member 20 in this way, the fixed end 310 of the harness holding member 300 is fastened to an inner surface of the attachment portion 226 by the bolt B1 and the nut N.

As shown in Fig. 7, the pair of fixed projections 29L, 29R, which corresponds to the pair of attachment portions 226 is formed inside of the pair of attachment portions 226. In this embodiment, the right fixed projection of the pair of fixed projections is represented as the fixed projection 29R, and the left fixed projection is represented as the fixed projection 29L. Each of the fixed projections 29L, 29R projects toward the first opening 221. The pair of fixed projections 29L, 29R is positioned within the lamp storing space 220S between an inner surface of the lamp housing 220 and an outer surface of the lamp unit 210 while the lamp unit 210 is fitted in the lamp housing 220. Further, the pair of fixed projections 29L, 29R as part of the lamp housing 220 is integrally formed together with the remaining part of the lamp housing 220, and those parts are formed of the same material. Fig. 9 shows only the right fixed projection 29R of the pair of fixed projections 29L, 29R of Fig. 7.

As described above, the harness holding member 300 is formed of the soft material. As such, an operator can flexibly deform the coupling portion 330 while gripping the movable end 320 with his/her fingers. Thus, the operator can move the movable end 320 in a direction from the first opening 221 toward the rear end 220b as indicated by the bold arrow a5 of Fig. 9, and can easily press the fixed projection 29R into the hole 321 of the movable end 320. Also, the operator can easily pull out the movable end 320 from the fixed projection 29R while the fixed projection 29R is pressed into the hole 321 of the movable end 320.

The cross section of the hole 321 of the movable end 320 is slightly smaller than the cross section of the fixed projection 29L, 29R. Therefore, with the fixed projection 29L, 29R pressed into the hole 321 of the movable end 320, an inner surface of the hole 321 of the movable end 320 is pushed and expanded by the fixed projection 29L, 29R, so that the hole 321 is deformed.

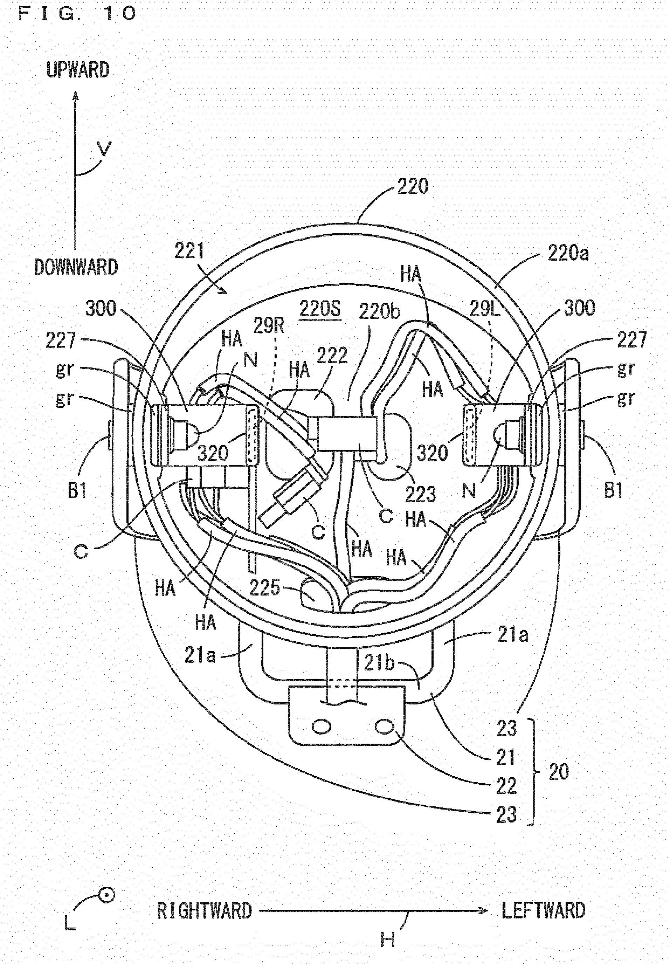

With the fixed end 310 of the harness holding member 300 fastened to the attachment portion 226 and with the movable end 320 of the harness holding member 300 not attached to the fixed projections 29L, 29R, the plurality of harnesses HA are positioned. Specifically, the plurality of harnesses HA (Fig. 7) drawn into the lamp housing 220 are positioned by the pair of fixed projections 29L, 29R and the pair of the harness holding members 300. Fig. 10 is a front view of the lamp housing 220 showing a state in which the plurality of harnesses HA are positioned. As shown in Fig. 10, the plurality of harnesses HA are drawn into the lamp storing space 220S of the lamp housing 220 through the second opening 222, the third opening 223 and the forth opening 225.

The plurality of harnesses HA drawn into the lamp housing 220 are inserted between each of the fixed projections 29L, 29R and an inner surface of a side portion of the lamp housing 220 while the movable ends 320 of the pair of harness holding members 300 are detached from the fixed projections 29L, 29R, respectively. Thereafter, the movable ends 320 of the pair of harness holding members 300 are pushed into the fixed projections 29L, 29R, respectively, and the fixed projections 29L, 29R are pressed into the holes 321 of the movable ends 320, respectively. Thus, as shown in Fig. 7, the plurality of harnesses HA are held by the harness holding members 300 between the fixed projections 29L, 29R and the inner surface of the lamp housing 220. In this case, the plurality of harnesses HA are prevented from swinging in the lamp housing 220.

In the lamp housing 220 according to this embodiment, the rear end recess 224 is formed on the left side of the rear end 220b as described above. As such, a space in which the harnesses HA can be held by the right fixed projection 29R and the right harness holding member 300 is larger than a space in which the harnesses HA can be held by the left fixed projection 29L and the left harness holding member 300 as shown in Fig. 7. Thus, in this example, a plurality of connectors C that connect the plurality of harnesses HA are arranged together with the plurality of harnesses HA between the right fixed projection 29R and the inner surface of the lamp housing 220. That is, the right fixed projection 29R and the right harness holding member 300 are used to hold the plurality of harnesses HA and the plurality of connectors C, and the left fixed projection 29L and the left harness holding member 300 are used to hold the plurality of harnesses HA. In this case, the plurality of connectors C that connect at least some of the harnesses HA are prevented from swinging in the lamp housing 220. Also, the plurality of connectors C are protected in the lamp housing 220.

After that, the lamp unit 210 is fitted into the lamp housing 220 as indicated by the bold arrow a6 of Fig. 9. In this case, since the plurality of harnesses HA and connectors C are positioned in the lamp storing space 220S by the pair of harness holding members 300, an operation of fitting the lamp unit 210 into the lamp housing 220 is facilitated.

### [3] Effects

(a) In the aforementioned motorcycle 100, the lamp housing 220 is fastened to the lamp support member 20 by the common bolts B1 and nuts N, and the fixed end 310 of each harness holding member 300 is fastened to the inner surface of the lamp housing 220. The plurality of harnesses HA drawn into the lamp housing 220 are led to spaces between the fixed projections 29L, 29R and the inner surface of the lamp housing 220. The fixed projections 29L, 29R are pressed into the holes 321 of the movable ends 320 of the harness holding members 300. Thus, the plurality of harnesses HA are held between the fixed projections 29L, 29R and the inner surface of the lamp housing 220 by the harness holding members 300. The lamp unit 210 is fitted into the lamp housing 220 such that the opening 221 of the lamp housing 220 is closed.
   With the above-described configuration, since the harness holding members 300 are formed of the soft material, a load applied from the harness holding members 300 to the plurality of harnesses HA is reduced. Further, since the plurality of harnesses HA are held in the lamp housing 220, deterioration of the plurality of harnesses HA due to the swinging of the plurality of harnesses HA in the lamp housing 220 is reduced. Further, since the fixed projections 29L, 29R project toward the opening of the lamp housing 220, the operator can easily press the fixed projections 29L, 29R into the holes 321 of the movable ends 320 and pull out the fixed projections 29L, 29R from the holes 321 of the movable ends 320. Thus, the operator can easily perform the operation of fitting the lamp unit 210 into the lamp housing 220.
(b) As shown in Fig. 8(b), the hole 321 is formed to extend from the other end 320b of the movable end 320 to the inner center of the movable end 320 in the harness holding member 300. On the other hand, the hole 321 is not formed from the one end 320a of the movable end 320 to the center of the movable end 320. Thus, with the fixed projections 29L, 29R pressed into the holes 321 of the movable ends 320, the one end 320a of each of the movable ends 320 projects from the tip of the corresponding fixed projection 29L, 29R toward the first opening 221 as shown in Fig. 7.

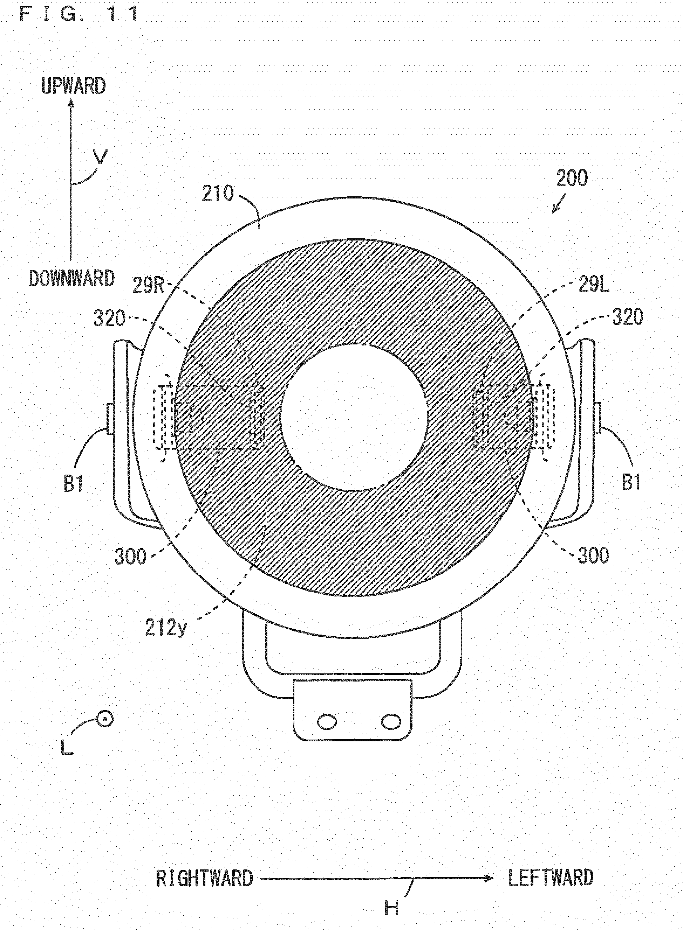

Fig. 11 is a front view showing a positional relationship between the tapered portion 212y of the lamp housing 220 and the pair of harness holding members 300 when the head lamp device 200 is viewed from the front of the vehicle. In Fig. 11, a portion corresponding to the tapered portion 212y of the lamp housing 220 is hatched in order to facilitate understanding of the shape and position of the tapered portion 212y when the head lamp device 200 is viewed from the front of the vehicle. As shown in Fig. 11, the tapered portion 212y of the lamp housing 220 overlaps the pair of fixed projections 29L, 29R and the pair of harness holding members 300 in a vehicle front view. Further, as shown in Fig. 7, the pair of fixed projections 29L, 29R and the pair of harness holding members 300 are positioned behind the tapered portion 212y.

With such a configuration, the one end 320a of each of the pair of movable ends 320 is abuttable against an outer surface of the tapered portion 212y of the lamp unit 210 while the lamp unit 210 is fitted in the lamp housing 220. Thus, the movable ends 320 are prevented from moving in a direction from the fixed projections 29L, 29R toward the opening 221, and the movable ends 320 are also prevented from being detached from the fixed projections 29L, 29R.

A dimension from the inner center of the movable end 320 to the one end 320a in the direction D1 of Fig. 8(b) may be set to be equal to a dimension of a gap between the outer surface of the tapered portion 212y of the lamp unit 210 and each of the fixed projections 29L, 29R in the front-and-rear direction L of Fig. 4. In this case, with the lamp unit 210 fitted in the lamp housing 220, the one end 320a of each of the pair of movable ends 320 comes into contact with the outer surface of the tapered portion 212y of the lamp unit 210. Thus, the movable ends 320 are sufficiently prevented from being detached from the fixed projections 29L, 29R.

Moreover, a depth of the hole 321 in the direction D1 of Fig. 8(b) may be set to be larger than the dimension of the gap between the outer surface of the tapered potion 212y of the lamp unit 210 and each of the fixed projections 29L, 29R in the front-and-rear direction L of Fig. 7. In this case, the gap between the outer surface of the tapered potion 212y of the lamp unit 210 and each of the fixed projections 29L, 29R is smaller than a stroke of each movable end 320 that is necessary to pull out the movable end 320 from the corresponding fixed projection 29L, 29R. Thus, detachment of the movable ends 320 from the fixed projections 29L, 29R is sufficiently prevented.
(c) As shown in Fig. 7, an outer surface of part of the lamp unit 210 stored in the lamp storing space 220S projects in a direction opposite to a direction in which the fixed projections 29L, 29R project while the lamp unit 210 is fitted in the lamp housing 220. A tip of each of the pair of fixed projections 29L, 29R is positioned between the outer surface of the lamp unit 210 and the inner surface of the lamp housing 220 in the right-and-left direction H.

More specifically, a right end 213R of the socket 213 of the lamp unit 210 in the right-and-left direction H extends in the front-and-rear direction L at a position further leftward than the right fixed projection 29R. A left end 213L of the socket 213 of the lamp unit 210 in the right-and-left direction H extends in the front-and-rear direction L at a position further rightward than the left fixed projection 29L. Further, a rear end 213B of the socket 213 of the lamp unit 210 is positioned further rearward than the tips of the pair of fixed projections 29R, 29L in the front-and-rear direction L.

In this case, when the lamp unit 210 is fitted into the lamp housing 220, the lamp unit 210 and the fixed projections 29R, 29L do not interfere with each other. Also, the tips of the fixed projections 29R, 29L function as a guide of the lamp unit 210. Thus, the operation of fitting the lamp unit 210 into the lamp housing 220 is further facilitated.
(d) When the attachment portion 226 of the lamp housing 220 is attached to the lamp attachment portion 23a of the lamp support member 20, the cylindrical potion 227a of the collar member 227 is inserted into the through hole 311 of the harness holding member 300. Further, the cylindrical potion 227a of the collar member 227 is inserted into the through hole 226h of the attachment portion 226 via the grommet gr.

As described above, the cylindrical potion 227a of the collar member 227 has the non-circular cross section corresponding to the through hole 226h of the attachment portion 226 and the through hole 311 of the harness holding member 300. Thus, relative rotation among the lamp housing 220, the fixed end 310 of the harness holding member 300, and the collar member 227 is prevented. In this state, the bolt B1 is inserted into the collar member 227, the nut N is attached to the bolt B1, and the fixed end 310 of the harness holding member 300 is fastened to the inner surface of the lamp housing 220. This prevents the fixed end 310 of the harness holding member 300 from rotating with respect to the lamp housing 220 together with the rotation of the bolt B1 or the nut N. Thus, the fixed end 310 of the harness holding member 300 can easily and appropriately be fastened to the inner surface of the lamp housing 220.
(e) As described above, the pair of fixed projections 29R, 29L as part of the lamp housing 220 is integrally formed together with the remaining part of the lamp housing 220, and those parts are formed of the same material. Thus, the number of components of the head lamp device 200 is reduced, and also assembly of the head lamp device 200 is facilitated.
(f) As shown in Fig. 7, in the head lamp device 200, a pair of fastening members including the pair of bolts B1 and the pair of nuts N, and also the pair of harness holding members 300 are provided at positions further rearward than the rear end of the front cylindrical portion 212x of the lamp unit 210. The pair of fastening members including the pair of bolts B1 and the pair of nuts N is positioned rightward and leftward of the tapered portion 212y of the lamp unit 210. Thus, when the lamp unit 210 is fitted into the lamp housing 220 attached to the lamp support member 20, the front cylindrical portion 212x and the tapered portion 212y do not interfere with the pair of fastening members or the pair of harness holding members 300.

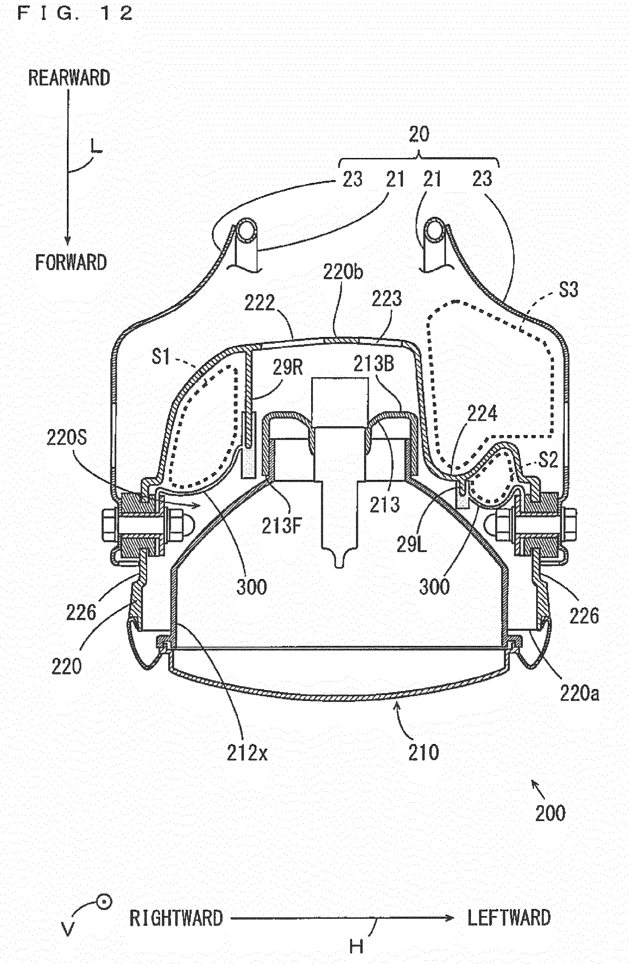

(g) Fig. 12 is a cross sectional view of the head lamp device 200 for explaining the rear end recess 224. The cross sectional view of Fig. 12 corresponds to the cross sectional view of Fig. 7. Also in Fig. 12, the lamp support member 20 is shown together with the head lamp device 200. Note that Fig. 12 does not show an illustration of the plurality of harnesses HA or the plurality of connectors C.

In the cross sectional view of Fig. 12, a space in which the plurality of harnesses HA and the plurality of connectors C can be held by the right fixed projection 29R and the harness holding member 300 is denoted as a right holding space S1 by the bold dotted line. A space in which the plurality of harnesses HA can be held by the left fixed projection 29L and the harness holding member 300 is denoted as a left holding space S2 by the bold dotted line.

In the right part of the rear end 220b of the lamp housing 220, a recess that corresponds to the rear end recess 224 in the left part of the rear end 220b is not formed. As such, the right holding space S1 is formed over a broad range that extends from a position further forward than a front end 213F of the socket 213 of the lamp unit 210 to a position further rearward than the rear end 213B of the socket 213 in the front-and-rear direction L. Thus, the right holding space S1, which is sufficiently large to hold the plurality of harnesses HA and the plurality of connectors C is ensured at the right side portion of the lamp housing 220.

On the other hand, the rear end recess 244 is formed to limit the range of the left holding space S2 to a range that extends from a position further forward than the front end 213F of the socket 213 of the lamp unit 210 to a position further forward than the rear end 213B of the socket 213 in the front-and-rear direction L. Thus, the minimum left holding space S2 for holding the plurality of harnesses HA is formed at the left-side portion of the lamp housing 220, and a large space S3 is formed between an outer surface of the rear end recess 224 directed rearward and the left support plate 23 of the lamp support member 20.

In this case, a component other than the head lamp device 200 can be formed in the space S3. For instance, in the motorcycle 100 of Fig. 1, the speed meter 90 is provided at a position above the head lamp device 200. As such, a speed meter cable that extends from the speed meter 90 to the front wheel 6 can be arranged in the space S3. Alternatively, a brake wire that extends from the handle 5 to the front wheel 6 can be arranged in the space S3. Thus, flexibility of layout in the front portion of the motorcycle 100 is improved while the interference between the head lamp device 200 and the other members is prevented.

### [4] Other Embodiments

(a) The attachment portions 226 for fastening the lamp housing 220 to the vehicle main body 1 are provided, respectively, at the both right and left side portions of the lamp housing 220 in the above-described embodiment. Alternatively, the attachment portions 226 may be provided at an upper end and a lower end of the lamp housing 220, respectively. In this case, in the lamp housing 220, a pair of fixed projections corresponding to the pair of attachment portions 226 is formed to be aligned in the top-and-bottom direction V. Accordingly, the plurality of harnesses HA are held by the harness holding members 300 between each fixed projection and the inner surface of the lamp housing 220, so that similar effects to those of the above-described embodiment can be achieved.
(b) The attachment portions 226 of the lamp housing 220 are fastened to the lamp support member 20, and the harness holding members 300 are fastened to the inner surfaces of the pair of attachment portions 226 in the above-described embodiment.
   Alternatively, one or not less than three attachment portions 226 may be formed in the lamp housing 220 together with a fixed projection corresponding to each attachment portion 226. Moreover, one or not less than three attachment portions 226 may be fastened to the vehicle main body 1, and the harness holding members 300 may be fastened to the inner surfaces of the attachment portions 226, respectively. Even in this case, the plurality of harnesses HA are held by the harness holding members 300 between the respective fixed projections and the inner surface of the lamp housing 220, so that similar effects to those of the above-described embodiment can be achieved.
(c) The rear end recess 224 is formed at the rear end 220b of the lamp housing 220 in the above-described embodiment. Alternatively, if the speed meter 90 is not provided above the lamp housing 220, the speed meter cable extending from the speed meter 90 will not interfere with the head lamp device 200. In addition, if a path of the brake wire is deviated from the position of the head lamp device 200, the brake wire will not interfere with the head lamp device 200. As such, if the speed meter 90 is not provided above the lamp housing 220, and the path of the brake wire is deviated from the position of the head lamp device 200, the rear end recess 224 need not be formed at the rear end 220b of the lamp housing 220.
(d) The fixed projections 29L, 29R as part of the lamp housing 220 are integrally formed together with the remaining part of the lamp housing 220, and those parts are formed of the same material in the above-described embodiment. Alternatively, the fixed projections 29L, 29R may be formed separately from the remaining part of the lamp housing 220.
(e) The through hole 226h having the substantially square cross section is formed in the attachment portion 226 of the lamp housing 220, and the through hole 311 having the substantially square cross section is formed in the fixed end 310 of the harness holding member 300 in the above-described embodiment. Furthermore, the cylindrical portion 227a of the collar member 227 has the substantially square cross section that corresponds to the through hole 226h of the attachment portion 226 and the through hole 311 of the harness holding member 300.
   The cross section of each of the through hole 226h of the attachment portion 226, the through hole 311 of the harness holding member 300, and the cylindrical portion 227a of the collar member 227 has only to be of a non-circular shape. For example, each cross section may be of a triangular shape or an elliptical shape.
(f) The rubber grommet gr is attached to the through hole 226h of the attachment portion 226, and also the collar member 227 is attached thereto in the above-described embodiment. Alternatively, at least one of the grommet gr and the collar member 227 does not have to be provided. Accordingly, the number of components is reduced.
(g) The above-described embodiment is the example in which the present teaching is applied to the motorcycle. Alternatively, the present teaching may be applied to another vehicle such as a four-wheeled automobile, a motor tricycle, an ATV (All Terrain Vehicle) or the like.
(h) The second opening 222 and the third opening 223 are formed to be aligned in the right-and-left direction H at the center of the rear end 220b of the lamp housing 220 in the above-described embodiment. Alternatively, the second opening 222 and the third opening 223 may be formed to be aligned in the top-and-bottom direction V or in a direction inclined to the top-and-bottom direction V and the right-and-left direction H.
(i) The three openings (the second, third, and fourth openings 222, 223, 225) are formed in the lamp housing 220 in order to allow the plurality of harnesses HA provided in the motorcycle 100 to be drawn into the lamp storing space 220S of the lamp housing 220 in the above-described embodiment. Alternatively, the number of openings for allowing the plurality of harnesses HA to be drawn into the lamp housing 220 may be one or two, or may be not less than four.

In this case, one or a plurality of openings may be formed in the rear end 220b of the lamp housing 220. Alternatively, one or a plurality of openings may be formed in portions except for the rear end 220b of the lamp housing 220.

### [5] Correspondences between Constituent Elements in Claims and Parts in Preferred Embodiments

In the following paragraphs, non-limiting examples of correspondences between various elements recited in the claims below and those described above with respect to various preferred embodiments are explained.

In the above-described embodiment, the vehicle main body 1 is an example of a vehicle main body, the head lamp device 200 is an example of a head lamp device, the harness HA, the main harness MH, and the sub-harness are examples of a plurality of harnesses, the first opening 221 is an example of an opening, the lamp housing 220 is an example of a lamp housing, the bolt B1, the nut N, and the collar member 227 are examples of a fastening member, and the lamp unit 210 is an example of a lamp unit.

The fixed projections 29L, 29R are an example of a fixed projection, the harness holding member 300 is an example of a holding member, the fixed end 310 is an example of a fixed end, the movable end 320 is an example of a movable end, the coupling portion 330 is an example of a coupling portion, the inner surface of the lamp housing 220 is an example of an inner surface of the lamp housing, the hole 321 of the harness holding member 300 is an example of a hole, and the motorcycle 100 is an example of a straddled vehicle.

The one end 320a of the harness holding member 300 is an example of an abutment portion that is abuttable against an outer surface of the lamp unit, the outer surfaces of the reflector member 212, the socket 213, and the bulb 214 of the lamp unit 210 are examples of a projecting outer surface, the bolt B1 is an example of a bolt, the collar member 227 is an example of a collar member, the through hole 226h of the attachment portion 226 is an example of a first through hole, the through hole 311 of the harness holding member 300 is an example of a second through hole, and the connector C is an example of a connector.

### INDUSTRIAL APPLICABILITY

The present teaching can be effectively utilized for various types of straddled vehicles.

## Claims

1. A straddled vehicle comprising:
a vehicle main body (1);
a head lamp device (200); and
a plurality of harnesses (HA,MH), wherein
the head lamp device (200) includes
a lamp housing (220) having an opening (221),
at least one fastening member (B1,N,227) that fastens the lamp housing (220) to part of the vehicle main body (1),
a lamp unit (210) that is fitted in the lamp housing (220) to close the opening (221),
at least one fixed projection (29L,29R) that projects toward the opening (221) in a space (220S) between an inner surface of the lamp housing (220) and an outer surface of the lamp unit (210), and
at least one holding member (300) made of a soft material,
the plurality of harnesses (HA,MH) are drawn into the lamp housing (220),
the holding member (300) includes
a fixed end (310),
a movable end (320), and
a coupling portion (330) that couples the fixed end (310) and the movable end (320) to each other, wherein
the fixed end (310) is fastened to the inner surface of an attachment portion (226) of the lamp housing (220) by the fastening member (B1,N,227), and
the movable end (320) is provided with a hole (321) into which the fixed projection (29L,29R) can be pressed and out of which the fixed projection (29L,29R) can be pulled, and
the plurality of harnesses (HA,MH) are held by the holding member (300) between the fixed projection (29L,29R) and the inner surface of the lamp housing (220) while the fixed projection (29L,29R) is pressed in the hole (321) of the movable end (320).

2. A straddled vehicle according to claim 1, wherein the movable end (320) is provided with an abutment portion (320a) that is abuttable against the outer surface of the lamp unit (210) while the fixed projection (29L,29R) is pressed in the hole (321) of the movable end (320), and the abutment portion (320a) prevents the movable end (320) from moving in a direction toward the opening (221).

3. A straddled vehicle according to claim 1 or 2, wherein the lamp unit (210) has a projecting outer surface that projects in the lamp housing (220) in a direction opposite to a direction in which the fixed projection (29L,29R) projects, and
at least a tip of the fixed projection (29L,29R) is positioned between the projecting outer surface of the lamp unit (210) and the inner surface of the lamp housing (220).

4. A straddled vehicle according to any one of claims 1 to 3, wherein the fastening member (B1,N,227) includes a bolt (B1) and a collar member (227),
the lamp housing (220) is provided with a first through hole (226h) having a non-circular cross section,
the fixed end (310) is provided with a second through hole (311) having a cross section of a same shape as the first through hole (226h),
the collar member (227) has a cross sectional shape corresponding to the first and second through holes (226h,311), and
the bolt (B1) is inserted in the collar member (227) while the collar member (227) is inserted in the first through hole (226h) of the lamp housing (220) and the second through hole (311) of the fixed end (310).

5. A straddled vehicle according to any one of claims 1 to 4, wherein the lamp housing (220) and the fixed projection (29L,29R) are integrally formed of a same material.

6. A straddled vehicle according to any one of claims 1 to 5, wherein at least some of the plurality of harnesses (HA,MH) are connected to one another by a connector (C) in the lamp housing (220).

7. A straddled vehicle according to claim 6, wherein the connector (C) is held between the fixed projection (29L,29R) and the inner surface of the lamp housing (220) by the holding member (300).

8. A straddled vehicle according to any one of claims 1 to 7, wherein a pair of fixed projections (29L,29R) is provided, that comprises a right fixed projection (29R) and a left fixed projection (29L), a pair of holding members (300) is provided, the movable end (320) of one holding member (300) is attached to the right fixed projection (29R) and the movable end (320) of the other holding member (300) is attached to the left fixed projection (29L).

9. A straddled vehicle according to claim 8, wherein pair of right and left attachment portions (226) is formed at the lamp housing (220), the fixed end (310) of one holding member (300) is attached to the right attachment portion (226) and the fixed end (310) of the other holding member (300) is attached to the left attachment portion (226).

## Patentansprüche

1. Ein Spreiz-Sitz-Fahrzeug, das umfasst:
einen Fahrzeug-Haupt-Körper (1);
eine Scheinwerfer-Vorrichtung (200); und
eine Mehrzahl von Kabelbäumen (HA, MH), wobei
die Scheinwerfer-Vorrichtung (200) beinhaltet
ein Leuchten-Gehäuse (220), das eine Öffnung (221) hat,
zumindest ein Befestigungs-Element (B1, N, 227), welches das Leuchten-Gehäuse (220) an einem Teil des Fahrzeug-Haupt-Körpers (1) befestigt,
eine Leuchten-Einheit (210), die in das Leuchten-Gehäuse (220) eingesetzt ist, um die Öffnung (221) zu schließen,
zumindest einen fixierten Vorsprung (29L, 29R), der zu der Öffnung (221) in einem Raum (220S) zwischen einer Innen-Fläche des Leuchten-Gehäuses (220) und einer Außen-Fläche der Leuchten-Einheit (210) vorspringt, und
zumindest ein Halte-Element (300), das aus einem weichen Material gemacht ist,
die Mehrzahl von Kabelbäumen (HA, MH) sind in das Leuchten-Gehäuse (220) gezogen,
das Halte-Element (300) beinhaltet
ein fixiertes Ende (310),
ein bewegbares Ende (320), und
einen Kopplungs-Abschnitt (330), der das fixierte Ende (310) und das bewegbare Ende (320) miteinander koppelt, wobei
das fixierte Ende (310) an der Innen-Fläche eines Anbringungs-Abschnitts (226) des Leuchten-Gehäuses (220) durch das Befestigungs-Element (B1, N, 227) befestigt ist, und
das bewegbare Ende (320) mit einem Loch (321) vorgesehen ist, in das der fixierte Vorsprung (29L, 39R) eingepresst werden kann, und aus dem der fixierte Vorsprung (29L, 29R) herausgezogen werden kann, und
die Mehrzahl von Kabelbäumen (HA, MH) sind durch das Halte-Element (300) zwischen dem fixierten Vorsprung (29L, 29R) und der Innen-Fläche des Leuchten-Gehäuses (220) gehalten, während der fixierte Vorsprung 829L, 29R) in das Loch (321) des bewegbaren Endes (320) gepresst ist.

2. Ein Spreiz-Sitz-Fahrzeug gemäß Anspruch 1, wobei das bewegbare Ende (320) mit einem Anlage-Abschnitt (320a) vorgesehen ist, der gegen die Außen-Fläche des Leuchten-Gehäuses (210) anliegt, während der fixierte Vorsprung (29L, 29R) in das Loch (321) des bewegbaren Endes (320) gepresst ist, und der Anlage-Abschnitt (320a) verhindert, dass das bewegbare Ende (320) sich in eine Richtung zu der Öffnung (221) bewegt.

3. Ein Spreiz-Sitz-Fahrzeug gemäß Anspruch 1 oder 2, wobei die Leuchten-Einheit (210) eine vorspringende Außen-Fläche hat, die in das Leuchten-Gehäuse (220) in eine Richtung entgegen zu einer Richtung vorspringt, in welcher der fixierte Vorsprung (29L, 29R) vorspringt, und
zumindest eine Spitze von dem fixierten Vorsprung (29L, 29R) ist zwischen der vorspringenden Außen-Fläche der Leuchten-Einheit (210) und der Innen-Fläche des Leuchten-Gehäuses (220) positioniert.

4. Ein Spreiz-Sitz-Fahrzeug gemäß irgendeinem der Ansprüchen 1 bis 3, wobei das Befestigungs-Element (B1, N, 227) einen Bolzen (B1) und ein Hülsen-Element (227) beinhaltet,
das Leuchten-Gehäuse (220) ist mit einem ersten Durchgangs-Loch (226h) vorgesehen, das einen nicht-kreisförmigen Querschnitt hat,
das fixierte Ende (310) ist mit einem zweiten Durchgangs-Loch (311) vorgesehen, das einen Querschnitt von der gleichen Form wie das erste Durchgangs-Loch (226h) hat,
das Hülsen-Element (227) hat eine Querschnitts-Form entsprechend zu den ersten und zweiten Durchgangs-Löchern (226h, 311), und
der Bolzen (B1) ist in das Hülsen-Element (227) eingesetzt, während das Hülsen-Element (227) in das erste Durchgangs-Loch (226h) des Leuchten-Gehäuses (220) und das zweite Durchgangs-Loch (311) des fixierten Endes (310) eingesetzt ist.

5. Ein Spreiz-Sitz-Fahrzeug gemäß irgendeinem der Ansprüchen 1 bis 4, wobei das Leuchten-Gehäuse 8220) und der fixierte Vorsprung (29L, 29R) integral aus einem gleichen Material ausgebildet sind.

6. Ein Spreiz-Sitz-Fahrzeug gemäß irgendeinem der Ansprüchen 1 bis 5, wobei zumindest einige der Mehrzahl der Kabelbäume HA, MH) miteinander durch einen Verbinder (C) in dem Leuchten-Gehäuse (220) verbunden sind.

7. Ein Spreiz-Sitz-Fahrzeug gemäß Anspruch 6, wobei der Verbinder (C) zwischen dem fixierten Vorsprung (29L, 29R) und der Innen-Fläche des Leuchten-Gehäuses (220) durch das Halte-Element (300) gehalten ist.

8. Ein Spreiz-Sitz-Fahrzeug gemäß irgendeinem der Ansprüchen 1 bis 7, wobei ein Paar von fixierten Vorsprüngen (29L, 29R) vorgesehen ist, das einen rechten fixierten Vorsprung (29R) und einen linken fixierten Vorsprung (29L) umfasst, ein Paar von Halte-Elementen (300) vorgesehen ist, das bewegbare Ende (320) von einem Halte-Element (300) an dem rechten fixierten Vorsprung (29R) angebracht ist und das bewegbare Ende (320) von dem anderen Halte-Element (300) an dem linken fixierten Vorsprung (29L) angebracht ist.

9. Ein Spreiz-Sitz-Fahrzeug gemäß Anspruch 8, wobei ein Paar von rechten und linken Anbringungs-Abschnitten (226) an dem Leuchten-Gehäuse (220) ausgebildet ist, das fixierte Ende (310) von einem Halte-Element an dem rechten Anbringungs-Abschnitt (226) angebracht ist und das fixierte Ende (310) von dem anderen Halte-Element (300) an dem linken Anbringungs-Abschnitt (26) angebracht ist.

## Revendications

1. Véhicule de type à enfourcher comportant :
un corps principal de véhicule (1) ;
un dispositif de phare avant (200) ; et
une pluralité de faisceaux de câblage (HA, MH), où
le dispositif de phare avant (200) comprend
un boîtier de phare (220) ayant une ouverture (221),
au moins un élément de fixation (B1, N, 227) qui fixe le boîtier de phare (220) sur une partie du corps principal de véhicule (1),
une unité de phare (210) qui est insérée dans le boîtier de phare (220) de manière à fermer l'ouverture (221),
au moins une saille fixe (29L, 29R) qui fait saillie vers l'ouverture (221) dans un espace (220S) entre une surface intérieure du boîtier de phare (220) et une surface extérieure de l'unité de phare (210), et
au moins un élément de maintien (300) composé d'un matériau souple,
la pluralité de faisceaux (HA, MH) passent dans le boîtier de phare (220),
l'élément de maintien (300) comprend
une extrémité fixe (310),
une extrémité mobile (320), et
une partie de raccord (330) qui raccorde l'extrémité fixe (310) à l'extrémité mobile (320), où
l'extrémité fixe (310) est fixée à la surface intérieure d'une partie de fixation (226) du boîtier de phare (220) au moyen de l'élément de fixation (B1, N, 227), et
l'extrémité mobile (320) est pourvue d'un trou (321) dans lequel la saillie fixe (29L, 29R) peut être pressée, et hors duquel la saillie fixe (29L, 29R) peut être retirée, et
la pluralité de faisceaux (HA, MH) sont maintenus par l'élément de maintien (300) entre la saillie fixe (29L, 29R) et la surface intérieure du boîtier de phare (220) lorsque la saillie fixe (29L, 29R) est pressée dans le trou (321) de l'extrémité mobile (320).

2. Véhicule de type à enfourcher selon la revendication 1, où l'extrémité mobile (320) est pourvue d'une partie de butée (320a) qui peut venir en butée contre la surface extérieure de l'unité de phare (210) quand la saillie fixe (29L, 29R) est pressée dans le trou (321) de l'extrémité mobile (320), et la partie de butée (320a) empêche l'extrémité mobile (320) de se déplacer en direction de l'ouverture (221).

3. Véhicule de type à enfourcher selon la revendication 1 ou 2, où l'unité de lampe (210) présente une surface extérieure en saillie qui fait saillie dans le boîtier de phare (220) dans une direction opposée à la direction dans laquelle la saillie fixe (29L, 29R) fait saillie, et
au moins un bout de la saillie fixe (29L, 29R) est positionnée entre la surface extérieure en saillie de l'unité de phare (210) et la surface intérieure du boîtier de phare (220).

4. Véhicule de type à enfourcher selon l'une quelconque des revendications 1 à 3, où l'élément de fixation (B1, N, 227) comprend un boulon (B1) et un élément de collier (227),
le boîtier de lampe (220) est pourvu d'un premier trou traversant (226h) ayant une section transversale non circulaire,
l'extrémité fixe (310) est pourvue d'un second trou traversant (311) ayant une section transversale de même forme que le premier trou traversant (226h),
l'élément de collier (227) présente une section transversale ayant une forme correspondant au premier et second trous traversants (226h, 311), et
le boulon (B1) est inséré dans l'élément de collier (227), tandis que l'élément de collier (227) est inséré dans le premier trou traversant (226) du boîtier de phare (220) et le second trou traversant (311) de l'extrémité fixe (310).

5. Véhicule de type à enfourcher selon l'une quelconque des revendications 1 à 4, où le boîtier de phare (220) et la saillie fixe (29L, 29R) sont formés d'une seule pièce et composés du même matériau.

6. Véhicule de type à enfourcher selon l'une quelconque des revendications 1 à 5, où au moins certains de la pluralité de faisceaux (HA, MH) sont connectés les uns aux autres par un connecteur (C) dans le boîtier de phare (220).

7. Véhicule de type à enfourcher selon la revendication 6, où le connecteur (C) est maintenu entre la saillie fixe (29L, 29R) et la surface intérieure du boîtier de phare (220) par l'élément de maintien (300).

8. Véhicule de type à enfourcher selon l'une quelconque des revendications 1 à 7, dans lequel sont prévues une paire de saillies fixes (29L, 29R) qui comporte une saillie fixe droite (29R) et une saillie fixe gauche (29L), une paire d'éléments de maintien (300), l'extrémité mobile (320) d'un élément de maintien (300) étant fixée à la saillie fixe droite (29R) et l'extrémité mobile (320) de l'autre élément de maintien (300) étant fixée à la saillie fixe gauche (29L).

9. Véhicule de type à enfourcher selon la revendication 8, où une paire de parties de fixation droite et gauche (226) est formée au niveau du boîtier de phare (220), l'extrémité fixe (310) d'un élément de maintien (300) est fixée à la partie de fixation droite (226) et l'extrémité fixe (310) de l'autre élément de maintien (300) est fixée à la partie de fixation gauche (226).
